# EUROPÄISCHE PATENTSCHRIFT

(11) **EP 1 851 151 B1**
(45) Veröffentlichungstag und Bekanntmachung des Hinweises auf die Patenterteilung: **26.05.2010**
(21) Anmeldenummer: 06706874.2
(22) Anmeldetag: 11.02.2006
(51) Int. Cl.: B65G 69/16

(54) **VERTIKALFÖRDERER IN EINEM KOMMISSIONIERSYSTEM ZUM VERTIKALFÖRDERN VON FÖRDERGÜTERN**
VERTICAL CONVEYOR IN A COMMISSIONING SYSTEM FOR VERTICALLY CONVEYING GOODS THAT ARE TO BE TRANSPORTED
TRANSPORTEUR VERTICAL DANS UN SYSTEME DE PREPARATION DES COMMANDES POUR LE TRANSPORT VERTICAL DE MARCHANDISES A TRANSPORTER

(30) Priorität: 14.02.2005 DE 102005006546
(43) Veröffentlichungstag der Anmeldung: 07.11.2007
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2006/001259
(87) Internationale Veröffentlichungsnummer: WO 2006/084750

(56) Entgegenhaltungen:
- WO-A-2004/087503
- FR-A- 2 613 957
- PATENT ABSTRACTS OF JAPAN Bd. 2000, Nr. 04, 31. August 2000 (2000-08-31) & JP 2000 025891 A (HAGA KENSETSU:KK), 25. Januar 2000 (2000-01-25)

## Beschreibung

Die Erfindung betrifft einen Vertikalförderer in einem Kommissioniersystem zum Vertikalfördern von stückgutartigen Fördergütern eines Kommissionierauftrages von einer oberen Übergabestelle zu einer vertikal ausgerichteten unteren Übergabestelle des Kommissioniersystems mittels einer die Fördergüter abstützenden vertikal ausgerichteten nach unten öffenbaren Aufnahme. Ein derartiger Vertikal förderer ist bereits aus FR-A-2 613 957 bekannt.

Nach dem Stand der Technik kennt man Vertikalförderer in Form von umlaufenden Paternosteraufzügen und oszillierenden Vertikalliften beispielsweise innerhalb eines Kommissionierregals einer Kommissionieranlage. Auch sogenannte Umlauf-C-Förderer und Umlauf-S-Förderer sind als Vertikalförderer bekannt, beispielsweise nach EP 0 396 925 A1. Allen vorgenannten Vertikalförderern eigen ist eine die Fördergüter abstützende bewegliche Aufnahme, z. B. Plattform, Kabine oder dergleichen, welche mittels Kraftantrieb höhenverstellbar und in Vertikalrichtung geführt ist. Von Nachteil sind der aufwändige Kraftantrieb, die aufwändige Führung und insbesondere die klobige Gesamtbauweise, die nur auf einen einzigen individuellen Höhenunterschied ausgelegt ist, zwischen denen das Fördergut zu transportieren ist. Soll das Fördergut über eine geringere oder größere Höhe gefördert werden, ist das System zumindest mit einfachen Mitteln nicht erweiterbar bzw. umbaubar. Den bekannten Systemen fehlt also die Flexibilität, d. h. Anpaßbarkeit an unterschiedliche Förderhöhen.

Aufgabe der Erfindung ist die Schaffung eines Vertikalförderers der eingangs genannten Art, der bei einfachem Aufbau zuverlässig und effektiv in einem Kommissioniersystem eingesetzt und unterschiedlichen lokalen Bedingungen und/oder unterschiedlichen betrieblichen Kommissionierbedingungen mit einfachen Mitteln angepaßt werden kann.

Gelöst wird die der Erfindung zugrundeliegende Aufgabe durch einen Vertikalförderer der im Anspruch 1 angegebenen Art, vorteilhaft weitergebildet durch die Merkmale der Ansprüche 2 bis 25.

Vorteilhafte Verfahren des Betriebs des Vertikalförderers kennzeichnen sich durch die Merkmale der Ansprüche 26 bis 30.

Wesen der Erfindung ist ein Vertikalförderer mit zumindest einer nach unten öffenbaren Aufnahme, durch welche im geöffneten Zustand aufgenommenes Fördergut nach unten in eine nächst untere vertikal ausgerichtete Aufnahme und/oder auf die untere Übergabestelle fällt, und die Aufnahme vorgesehen ist in Form einer bodenseitig öffenbaren Schale zwischen den Übergabestellen mit zwei aufeinander zuweisenden bodenseitig öffenbaren Stell-Klappwänden oder zwei aufeinander zuweisenden bodenseitig öffenbaren Horizontal-Schiebern als Öffnungsmaul, wobei die beiden verschwenkbaren Stell-Klappwände, deren Schwenkachsen in vertikalen Führungsschienen höhenverstellbar sind, bzw. die beiden Horizontal-Schieber im Bereich des bodenseitigen Öffnungsmauls der Schale in horizontalen Führungsschienen seitlich geführt sind. Es versteht sich, daß die erfindungsgemäße Schale auch als Behälter mit einem hohen Umfangsrand ausgebildet sein kann.

Die Erfindung sieht also in einer ersten grundsätzlichen Ausführungsvariante bei einer Schale zwei gleich ausgebildete Klappwände vor. Jede Klappwand ist nicht etwa um eine stationäre Schwenkachse verschwenkbar, sondern es ist die horizontale Schwenkachse selbst erfindungsgemäß in vertikalen Führungsschienen höhenverstellbar. Hierbei ist das der Schwenkachse entfernte Ende einer jeden Klappwand zusätzlich erfindungsgemäß in horizontalen Führungsschienen seitlich im Bereich des Öffnungsmauls der Schale geführt. Bei einer geöffneten Schale ist das Öffnungsmaul vergleichsweise groß, und es steht die Klappwand steil oder nahezu senkrecht. Bei geschlossener Schale gelangt die Klappwand in eine zur Horizontalen leicht geneigte Flachlage und bildet zusammen mit der anderen Klappwand vollständig den winkligen Boden der Schale. Wird eine derartige Schale durch gleichzeitiges Betätigen beider Klappwände geöffnet, fällt das aufgenommene Fördergut mittig ohne seitliches Versetzen nach unten. Selbst bei einseitigem Öffnen nur einer Klappwand gelangt das Fördergut noch hinreichend genau vertikal nach unten in eine Nachfolgeschale oder dergleichen. Die Schräge der geschlossenen Klappwand bewirkt, daß die Schale gleichwohl komplett geleert wird. Der Bewegungsablauf der stabilen Klappwand ist durch die erfindungsgemäßen vertikalen und horizontalen Führungseinrichtungen klar definiert. Dadurch lassen sich vergleichsweise große Schalen mit großem Öffnungsmaul bei kompakten Aufbau einrichten.

Gleiches gilt für die andere grundsätzliche Ausführungsvariante der Erfindung, bei der die Schale bodenseitig zwei gleich ausgebildete Horizontalschieber besitzt, die ebenfalls ein großes Öffnungsmaul schaffen und deren Oberseite ebenfalls bevorzugt Schrägflächen sind. Die beiden Horizontalschieber sind auf der gesamten horizontalen Unterlage hinreichend geführt, so daß auch hier die Konstruktion größerer Schalen möglich ist. Die Vertikalführung der ersten Ausführungsvariante kann hier entfallen.

Insbesondere sind mehrere identische gleich beabstandete Schalen in einer Vertikalanordnung als Vertikalturm vorgesehen, welche den Höhenunterschied zwischen der oberen und der unteren Übergabestelle überbrücken, wobei zumindest zwei Vertikaltürme in einer Parallelanordnung vorgesehen sein können.

Die Schalen sind mit besonderem Vorzug zumindest großenteils selbsttragende Bauelemente bzw. Bau-Module, wobei die Zahl der vorzugsweise vertikal zusammensteckbaren Bau-Module durch die Förderhöhe bzw. den zu überbrückenden Höhenunterschied zwischen der oberen und der unteren Übergabestelle bestimmt wird.

Die obere Übergabestelle kann das Längsende oder der seitliche Endbereich eines horizontalen Zentralbandes eines Kommissionierautomaten sein, während die untere Übergabestelle mit Vorzug der Eingang eines horizontalen Abförderbandes mit darauf befindlichem Auftragsbehälter oder ein Puffertrichter ist.

Insbesondere im vorgenannten Fall können die Schalen als Zwischenspeicher zumindest eines Fördergut-Auftrages verwendet werden.

Betreiben läßt sich der vorgenannte Vertikalförderer unterschiedlich insbesondere durch unterschiedliches Takten geöffneter und/oder geschlossener Schalen von der obersten bis zur untersten Schale.

So können einerseits direkt benachbarte Schalen wechselweise geöffnet und geschlossen werden, um Fördergut bis zur unteren Übergabestelle zu transportieren.

Es kann aber auch das Fördergut andererseits eine oder mehrere benachbarte gleichzeitig geöffnete Schale(n) durchlaufen, gegebenenfalls sogar alle geöffneten Schalen gleichzeitig.

Da die Schalen zwei öffenbare Klappwände oder zwei bodenseitige Schieber besitzen, können die Klappwände oder Schieber benachbarter Schalen so geöffnet werden, daß das Fördergut zumindest einige der Schalen kaskadenartig im Zick-Zack durchläuft.

Noch vor der Übergabe des Förderguts bei der unteren Übergabestelle kann die geschlossene oberste Schale gegebenenfalls mit Fördergut des gleichen Kommissionierauftrags oder eines neuen Kommissionierauftrags befüllt werden.

Die Erfindung betrifft also vorzugsweise die besondere Gestaltung einer Automatenübergabestelle für den Höhenunterschied zwischen einem Zentralband und einer nachfolgenden tiefer gelegenen Behälterfördertechnik. Die Übergabestelle kann auch für übereinander liegende getrennte Kommissionierautomaten ausgebildet sein. Die Automatenübergabe erfolgt mittels übereinander liegenden Schalen in einer Anzahl je nach der zu überbrückenden Vertikalhöhe. Der obere Automat befördert mittels Zentralband die Aufträge (bevorzugt jeweils einen Auftrag) in die oberste Schale. Durch Weitertakten wird der jeweilige Auftrag in die darunter liegende Schale übergeben. Die unterste Schale übergibt den Auftrag letztendlich einer gemeinsamen unteren Übergabestelle (Puffertrichter).

Die Erfindung nützt mit besonderem Vorteil die Erkenntnis aus, daß hinreichend stabiles Fördergut, welches ohnehin nur von oben nach unten im Gesamtfördersystem der Kommissionieranlage(n) zu befördern ist, dosiert zumindest über definierte Teilstrecken im freien Fall nach unten durch Takten von stationären öffenbaren Schalen bzw. Behältern mit großer Geschwindigkeit transportiert und gegebenenfalls auch zwischengespeichert werden kann, ohne daß aufwändige Antriebsmittel zum Fördern notwendig sind, und gleichwohl das Fördergut oder deren Verpackung nicht beschädigt wird. Verlangt die Anlage höhere Vertikalförderstrecken, so werden einfach mehrere vorzugsweise gleich aufgebaute Einzelschalen verwendet. Bei besonders stabilem oder unempfindlichem Fördergut kann die gesamte Förderhöhe im freien Fall vorzugsweise im Zick-Zack durchlaufen werden. Der praktische Betrieb zeigt, daß auf diese Weise in vielen Fällen eines Förderguts Förderhöhen von mehreren Metern problemfrei überwunden werden können, ohne ein bekanntes aufwändiges Liftsystem mit beweglichen Schalen und eigenem Fördertrieb und eigener Vertikalführung verwenden zu müssen.

Zwar kennt man in Kommissioniersystemen z. B. schräge Rutschen, die Fördergut unter Ausnützung des freien Falls abwärts transportieren, jedoch keine Vertikalabwärtsförderung mit dosiert freiem Fall und/oder einer Zwischenspeichermöglichkeit eines Förderguts. Auch sind schräge Rutschen nicht für unterschiedliche Vertikalhöhen geeignet und im Baukastensystem erweiterbar, zumindest nicht bei engem Bauraum.

Die Erfindung wird nachfolgend anhand von Ausführungsbeispielen unter Bezugnahme auf die beigefügten Zeichnungen näher beschrieben; es zeigen:
- Figur 1: einen erfindungsgemäßen Vertikalförderer zwischen hochgelegenem Zentralband und tief gelegenem An- schlußförderband eines Kommissioniersystems schema- tisch in einer Vertikalschnittansicht, wobei Zentral- band und Anschlußförderband im Verhältnis zum Verti- kalförderer nicht größenadäquat dargestellt sind,
- Figur 2: den Vertikalförderer im wesentlichen nach Figur 1 mit zwei benachbarten geöffneten Schalen in einer aufge- brochenen perspektivischen schematischen Ansicht,
- Figur 3: den Vertikalförderer ähnlich Figur 2 bei geschlosse- nen Schalen,
- Figuren 4 und 5: eine einzige Schale des Vertikalförderers nach den Figuren 2 und 3 in aufgebrochenen perspekti- vischen Ansichten einmal geschlossen und einmal ge- öffnet,
- Figuren 6 und 7: aufgebrochene perspektivische Ansichten ähn- lich den Figuren 4 und 5 einer anders gestalteten Schale mit zwei bodenseitigen Schiebern einmal ge- schlossen und einmal geöffnet,
- Figuren 8 und 9: die Schalen nach den Figuren 6 und 7 in sche- matischen Seitenansichten, und
- Figur 10: den Vertikalförderer mit Schalen nach den Figuren 6 bis 9 in einer schematischen Seitenansicht ähnlich Figur 1.

Gemäß den Zeichnungen umfaßt ein Vertikalförderer 1 in einem Kommissioniersystem zum Vertikalfördern von stückgutartigen Fördergütern eines Kommissionierauftrages M, M' eine obere Übergabestelle 2 und eine unteren Übergabestelle 3.

Die obere Übergabestelle 2 des Kommissioniersystems ist definiert durch das Längsende eines in Pfeilrichtung 20 angetriebenen horizontalen Zentralbandes 5 eines vorgelagerten im einzelnen nicht veranschaulichten Kommissionierautomaten.

Die obere Übergabestelle 2 kann auch der seitliche Endbereich des Zentralbandes 5 sein, wobei dann die Übergabe der Fördergüter durch Querschieber erfolgt.

Die untere Übergabestelle 3 ist der Eingangsbereich eines tiefer gelegenen horizontalen Abförderbandes 6, auf dem ein Auftragsbehälter 7 angeordnet ist. Der Auftragsbehälter 7 befindet sich in einem vertikalen Abstand von etwa einem Meter zum Zentralband 5.

Anstelle des Auftragsbehälters 7 und/oder des Abförderbandes 6 kann auch ein Puffertrichter vorgesehen sein.

Der Vertikalförderer 1 besitzt mehrere - im Ausführungsbeispiel der Zeichnung zwei - identische gleich beabstandete Schalen 4, 4' in einer Vertikalanordnung als Vertikalturm, welche den Höhenunterschied zwischen der oberen und der unteren Übergabestelle 2, 3 überbrücken.

Es können mehrere Vertikaltürme in einer Parallelanordnung vorgesehen sein.

Die Schalen 4, 4' können selbsttragende Bauelemente bzw. Bau-Module sein, wobei die Zahl der Bau-Module durch die Förderhöhe bzw. den zu überbrückenden Höhenunterschied zwischen der oberen und der unteren Übergabestelle 2, 3 bestimmt wird. Die Bau-Module können in einer Ausführungsvariante vertikal zusammengesteckt werden.

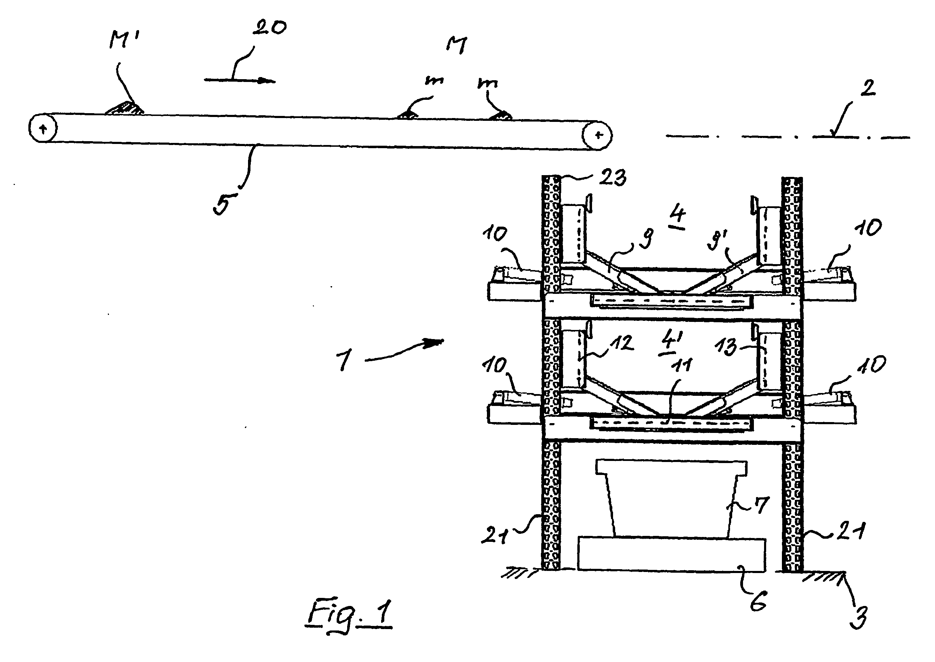

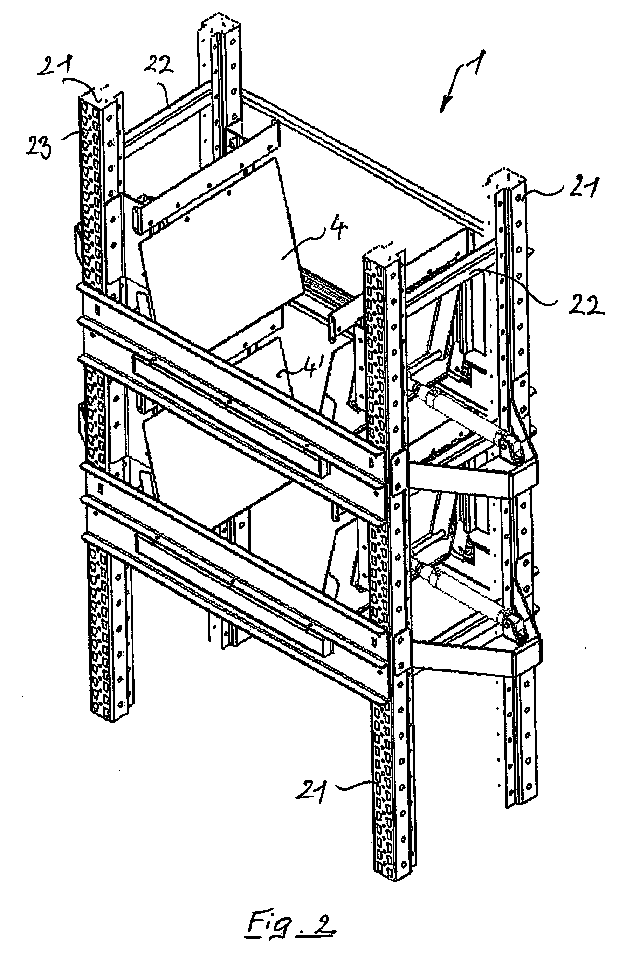

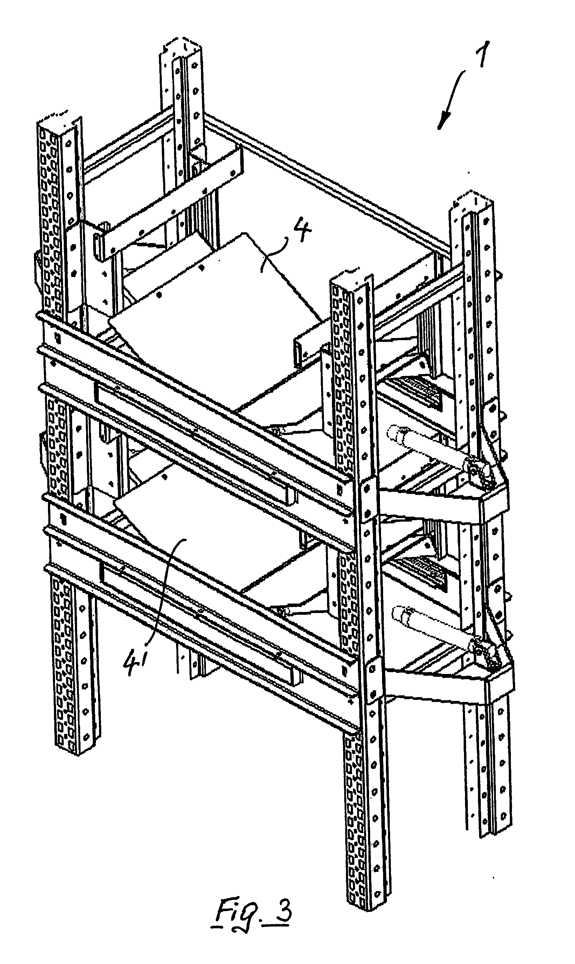

In der in den Figuren 1 bis 5 gezeigten Ausführungsvariante sind die Schalen 4, 4' mit vier vertikalen perforierten Eckleisten 21 verbunden, die zusätzliche Querstreben 22 aufweisen. Die Länge der im Querschnitt winkligen Eckleisten 21 wird durch die Höhe des Vertikalturms bestimmt. Viele vorgefertigte Perforationsstellen 23 der profilierten Eckleisten erlauben eine unterschiedliche Wahl eines Abstands der (zueinander gleich beabstandeten) Schalen mit einfachem Montageaufwand. Sind die Schalen 4, 4' mit den Eckleisten 21 montiert, insbesondere verschraubt, ergibt sich ein stabiler Vertikalturm.

Jede stationäre Schale 4, 4' des Vertikalturmes kann zum Zwecke der Abgabe aufgenommenen Förderguts geöffnet werden. Es besitzt die Schale öffenbare Boden-/Seitenklappen, nämlich gemäß den beiden Ausführungsbeispielen der Zeichnungen zwei nach unten öffenbare gleich ausgebildete Klappwände 9, 9' oder Schieber 25, 25', durch welche im geöffneten Zustand aufgenommenes Fördergut der Schale 4 nach unten in die nächst untere Schale 4' und/oder auf die untere Übergabestelle 3 fällt.

Jede Schale 4, 4' besitzt zwei entgegengesetzte voneinander beabstandete feststehende Seitenwände 8 und dazwischenliegend die vorgenannten beiden aufeinander zuweisenden Klappwände 9, 9', die durch jeweils einen horizontalen, schrägen oder vertikalen Stelltrieb 10 aus einer geschlossenen V-Lage in eine bodenseitig offene nahezu vertikale Parallel-Lage durch eine (nicht veranschaulichte) Steuereinrichtung verstellbar sind. Die Steuereinrichtung ist Bestandteil der Zentralsteuerungseinheit des Kommissionierautomaten.

Der Stelltrieb 10 weist ein pneumatisches Bauelement auf und besitzt ein 5/3-Wege-Ventil mit zwei Magnetventilen pro Ebene bzw. Schale, wobei je zwei Magnetschalter (Reedkontakte) pro Pneumatikzylinder für die Positionen "offen" und "geschlossen" vorgesehen sind. Die Zentralsteuerungseinheit in Verbindung mit einem intelligenten Busknoten übernimmt den logischen Ablauf.

Gegebenenfalls können mehrere Schalen 4, 4' bzw. mehrere Ebenen durch einen gemeinsamen Stelltrieb betätigt sein.

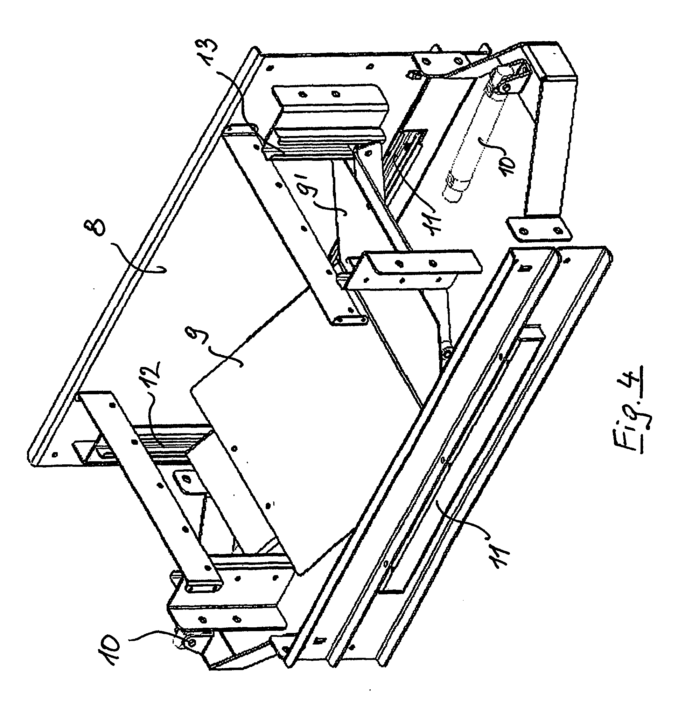

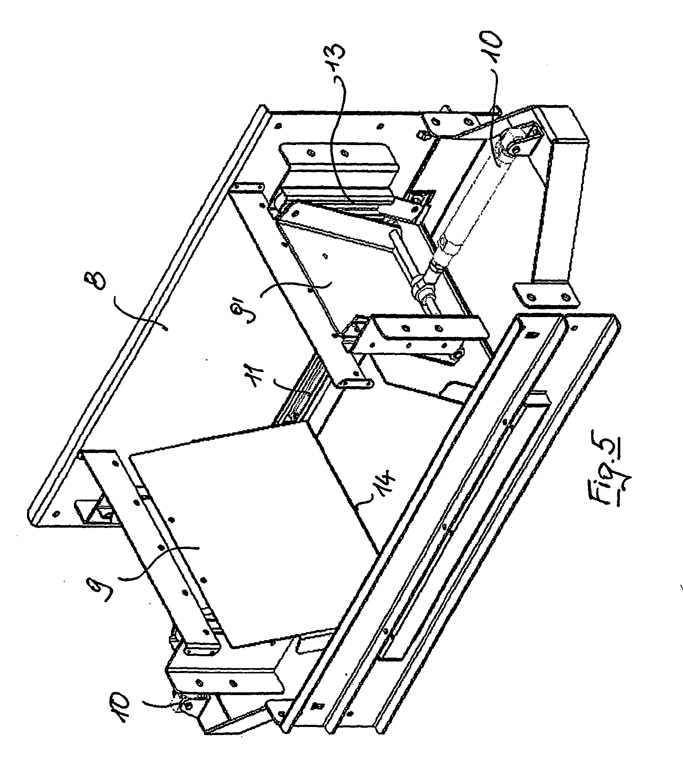

Die beiden feststehenden Seitenwände 8 besitzen schaleninnenseitig Führungsschienen 11, 12, 13, in denen die Klappwände 9, 9' als Schieber geführt sind. Zwei getrennte Schieber werden in den Führungsschienen zum einen vertikal und zum anderen horizontal geführt. Der Pneumatikzylinder pro Schieber bewirkt eine zweiachsige Bewegung einer Schale (vgl. Produktschale "geschlossen" und "offen" gemäß den Figuren 4 und 5).

Im besonderen weist jede Seitenwand 8 im Bodenbereich der Schale eine untere horizontale Führungsschiene 11 und in jedem Seitenbereich eine vertikale Führungsschiene 12, 13 auf, in denen die Klappwände an den unteren Enden und an den seitlich oberen Enden über Rollen oder Gleitsteine geführt sind.

Die beiden Klappwände 9, 9' und/oder beiden Seitenwände 8 können für eine sanfte Übergabe des Förderguts eine stoßdämpfende verschleißfeste Innenauskleidung besitzen.

In der geschlossenen V-Lage sind die Klappwände 9, 9' jeweils um etwa 30° bis 45° zur Horizontalen geneigt und stoßen mit ihren unteren Horizontalkanten 14 oder deren Innenauskleidung aneinander.

Beide entgegengesetzten Seitenwände 8 (im Ausführungsbeispiel der Zeichnungen nur eine Seitenwand gezeigt) verlaufen vertikal, können aber auch nach unten konisch verjüngt verlaufen.

Jede Schale kann zumindest eine Fördergut-Kontrolleinrichtung zur Erkennung des Förderguts in der Schale und/oder zur Steuerung des Förderguts bzw. Auftrags durch die Schale aufweisen, insbesondere eine Lichtschranke, welche an die Steuereinrichtung und an den Stelltrieb 10 angeschlossen ist.

Im Betrieb des Vertikalförderers 1 gelangt das Fördergut durch Takten geöffneter und/oder geschlossener Schalen 4, 4' von der obersten bis zur untersten Schale und von dort zur unteren Übergabestelle 3.

Insbesondere kann gemäß Figur 1 zumindest eine Teilmenge m eines Fördergut-Auftrages M bei der oberen Übergabestelle 2 in die oberste geschlossenen Schale 4 automatisch eingegeben werden. Dann wird die oberste Schale 4 durch den Stelltrieb 10 bei einer geschlossenen darunter liegenden Schale 4' geöffnet und dadurch die darunter liegende Schale 4' gefüllt, welche nach einem Befüllen und Öffnen das Fördergut nach Art der obersten Schale 4 in die nächst tiefere geschlossene Schale befördert, und so fort, bis die unterste geöffnete Schale das Fördergut der unteren Übergabestelle 3 übergibt.

Noch vor der Übergabe des Förderguts bei der unteren Übergabestelle 3 kann gegebenenfalls die geschlossene oberste Schale 4 mit Fördergut m des gleichen Kommissionierauftrags M oder eines neuen Kommissionierauftrags M' befüllt werden.

Auch kann, je nach Einzelfall, Gesamtförderhöhe, Schalenabstand und/oder Konsistenz des Fördergutes, das Fördergut eine oder mehrere benachbarte gleichzeitig geöffnete Schale(n) 4, 4' durchlaufen, gegebenenfalls auch alle geöffneten Schalen gleichzeitig.

Bei entsprechender Öffnung von einzelnen Klappwänden 9, 9' kann das Fördergut auch alle gleichzeitig halb geöffneten Schalen 4, 4' kaskadenartig im Zick-Zack durchlaufen.

Alternativ können bei entsprechender Ansteuerung der Klappwände 9, 9' geschlossene Schalen 4, 4' als Zwischenspeicher verwendet werden.

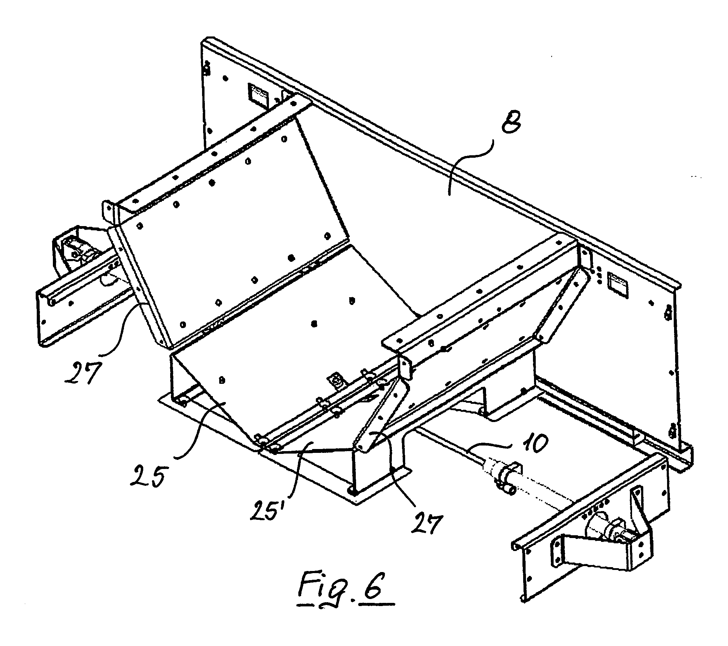

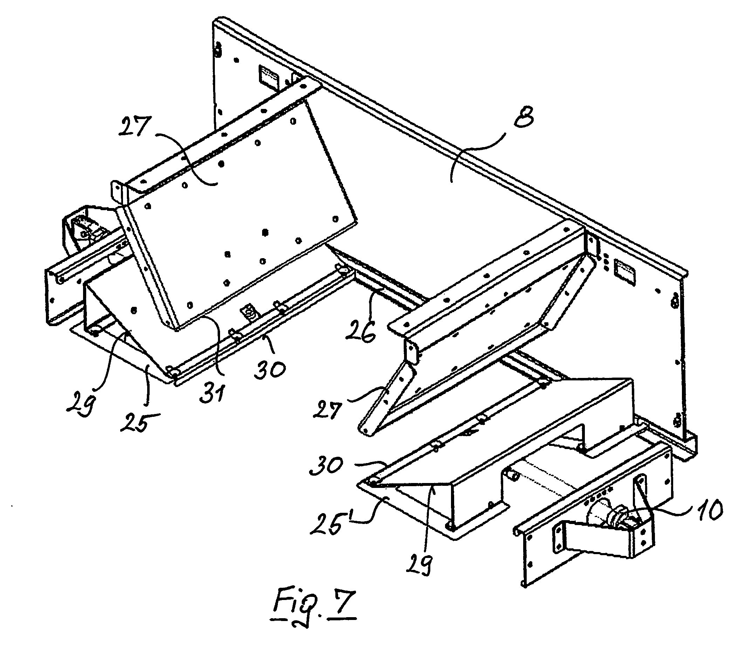

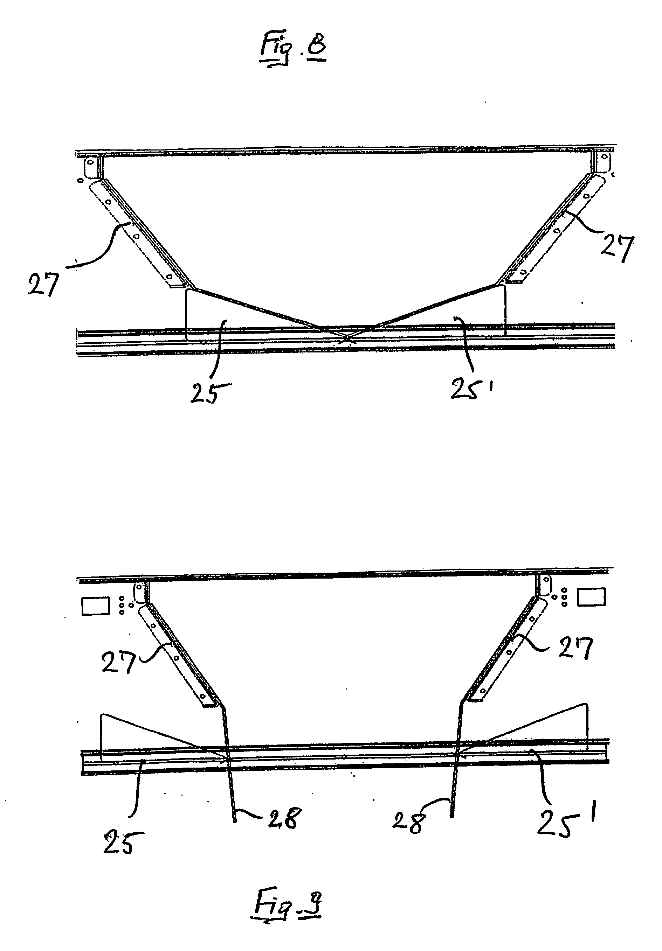

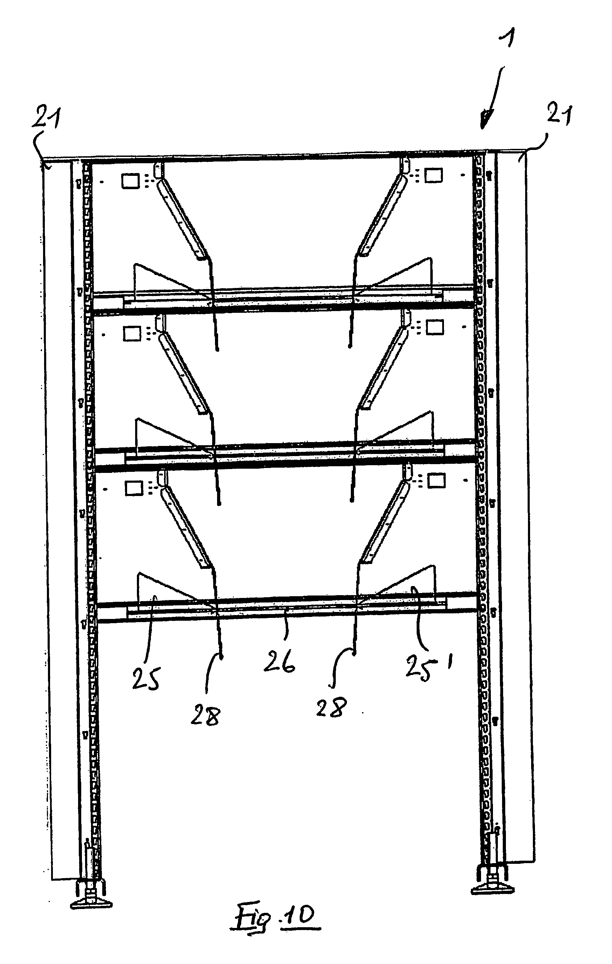

Während im Ausführungsbeispiel nach den Figuren 1 bis 5 Schalen 4, 4' mit zwei Klappwänden 9, 9' dargestellt, welche insgesamt verstellbar sind, sind beim Ausführungsbeispiel nach den Figuren 6 bis 10 anstelle der beweglichen Klappwände im oberen Bereich feststehende Querwände 27 und im unteren Bereich besondere Schieber 25, 25' vorgesehen, welche die gleiche Funktion wie die Klappwände erfüllen.

Insbesondere sind zwei entgegengesetzte verstellbare bodenseitige Schieber 25, 25' in Keilform mit horizontaler Unterseite und schräger Oberseite bzw. oberer Schrägfläche 29 vorgesehen. Die Schieber 25, 25' sind in horizontalen Führungsschienen 26 an den Innenseiten der Seitenwände 8 geführt und besitzen jeweils eine stoßdämpfende Einrichtung in Form eines flexiblen Gurtes oder Lappens 28, welcher auch eine Stoßdämpfung bei den Querwänden 27 besorgt, diese überdeckt und an den Querwänden 27 hängend befestigt ist sowie über den unteren Horizontalrand 31 der Querwände 27 hinausreicht. Im Betrieb eines Schiebers liegt der Gurt oder Lappen 28 lose auf der Schrägfläche 29 des Schiebers 25, 25' zumindest bei geschlossenem Schieber auf. Die beiden aufeinander zu gerichteten keilförmigen Schieber 25, 25' besitzen an der Keilspitze aufeinander zu gerichtete Horizontalkanten 30, die bei geschlossenen Schiebern aneinanderstoßen und so eine geschlossene Schale 4, 4' besorgen. Die Querwände 27 sind schräg angeordnet und erstrecken sich mit ihrem unteren Horizontalrand 31 bis zu den bodenseitigen Schiebern 25, 25'. Die Schräge der Querwände 27 beträgt etwa 30° zur Vertikalen. Die Schräge der Schrägfläche 29 der Schieber 25, 25' beträgt etwa 30° zur Horizontalen.

## Patentansprüche

1. Vertikalförderer (1) in einem Kommissioniersystem zum Vertikalfördern von stückgutartigen Fördergütern eines Kommissionierauftrages von einer oberen Übergabestelle (2) zu einer vertikal ausgerichteten unteren Übergabestelle (3) des Kommissioniersystems mittels einer die Fördergüter abstützenden vertikal ausgerichteten nach unten öffenbaren Aufnahme,
wobei zumindest eine Aufnahme vorgesehen ist, durch welche im geöffneten Zustand aufgenommenes Fördergut nach unten in eine nächst untere vertikal ausgerichtete Aufnahme und/oder auf die untere Übergabestelle (3) fällt, und die Aufnahme vorgesehen ist in Form einer bodenseitig öffenbaren Schale (4, 4') zwischen den Übergabestellen (2, 3), mit zwei aufeinander zuweisenden bodenseitig öffenbaren Stell-Klappwänden (9, 9') als Öffnungsmaul wobei für ein Öffnen und Schließen der Schale die Schwenkachsen der beiden Stell-Klappwände (9, 9') in vertikalen Führungsschienen (12, 13) höhenverstellbar und gleichzeitig die unteren Enden der Stell-Klappwände (9. 9') in horizontalen Führungsschienen (11) seitlich geführt sind; oder zwei aufeinander zuweisenden bodenseitig öffenbaren Horizontal-Schiebern (25, 25') in Keilform mit einer horizontalen Unterseite und einer oberen Schrägfläche (28) als Öffnungsmaul, wobei für ein Öffnen und Schließen der Schale die beiden Horizontal-Schieber (25, 25') im Bereich des bodenseitigen Öffnungsmauls der Schale (4, 4') in horizontalen Fürungsschienen (26) seitlich geführt sind.

2. Vertikalförderer nach Anspruch 1,
**dadurch gekennzeichnet,**
**daß** mehrere identische gleich beabstandete Schalen (4, 4') in einer Vertikalanordnung als Vertikalturm vorgesehen sind, welche den Höhenunterschied zwischen der oberen und der unteren Übergabestelle (2, 3) überbrücken.

3. Vertikalförderer nach Anspruch 2,
**dadurch gekennzeichnet,**
**daß** zumindest zwei Vertikaltürme in einer Parallelanordnung vorgesehen sind.

4. Vertikalförderer nach Anspruch 2 oder 3,
**dadurch gekennzeichnet,**
**daß** die Schalen (4, 4') zumindest großenteils selbsttragende Bauelemente bzw. Bau-Module sind.

5. Vertikalförderer nach Anspruch 4,
**dadurch gekennzeichnet,**
**daß** die Zahl der Bau-Module durch die Förderhöhe bzw. den zu überbrückenden Höhenunterschied zwischen der oberen und der unteren Übergabestelle (2, 3) bestimmt wird.

6. Vertikalförderer nach.Anspruch 4 oder 5,
**dadurch gekennzeichnet,**
**daß** die Bau-Module vertikal zusammensteckbar sind.

7. Vertikalförderer nach einem der Ansprüche 1 bis 6,
**dadurch gekennzeichnet,**
**daß** die obere Übergabestelle (2) das Längsende oder der seitliche Endbereich eines horizontalen Zentralbandes (5) eines Kommissionierautomaten ist.

8. Vertikalförderer nach einem der Ansprüche 1 bis 7,
**dadurch gekennzeichnet,**
**daß** die untere Übergabestelle (3) der Eingang eines horizontalen Abförderbandes (6) mit darauf befindlichem Auftragsbehälter (7) oder ein Puffertrichter ist.

9. Vertikalförderer nach einem der Ansprüche 1 bis 8,
**dadurch gekennzeichnet,**
**daß** die Schale (4, 4') zwei entgegengesetzte voneinander beabstandete feststehende Seitenwände (8) und dazwischenliegend die zwei entgegengesetzt verstellbaren Stell-Klappwände (9, 9') oder die zwei entgegengesetzt verstellbaren bodenseitigen Horizontal-Schieber (25, 25') besitzt, die durch zumindest einen Stelltrieb (10) aus einer bodenseitig geschlossenen Lage in eine bodenseitig offene Lage durch zumindest eine Steuereinrichtung verstellbar sind.

10. Vertikalförderer nach Anspruch 9,
**dadurch gekennzeichnet,**
**daß** der Stelltrieb (10) ein pneumatisches Bauelement aufweist.

11. Vertikalförderer nach einem der Ansprüche 2 bis 10,
**dadurch gekennzeichnet,**
**daß** mehrere Schalen (4, 4') durch einen gemeinsamen Stelltrieb betätigt sind.

12. Vertikalförderer nach einem der Ansprüche 9 bis 11,
**dadurch gekennzeichnet,**
**daß** die beiden feststehenden Seitenwände (8) schaleninnenseitig die vertikalen und horizontalen Führungsschienen (11, 12, 13, 26) aufweisen.

13. Vertikalförderer nach Anspruch 12,
**dadurch gekennzeichnet,**
**daß** jede Seitenwand (8) im Bodenbereich der Schale eine untere horizontale Führungsschiene (11) und in jedem Seitenbereich eine vertikale Führungsschiene (12, 13) aufweist, in denen die Stell-Klappwände (9, 9') an den unteren Enden und an den seitlich oberen Enden über Rollen oder Gleitsteine geführt sind.

14. Vertikalförderer nach einem der Ansprüche 9 bis 13,
**dadurch gekennzeichnet,**
**daß** die Stell-Klappwände (9, 9'), die Horizontal-Schieber (25, 25') und/oder die Seitenwände (8) eine stoßdämpfende Innenauskleidung besitzen.

15. Vertikalförderer nach Anspruch 14,
**dadurch gekennzeichnet,**
**daß** die Innenauskleidung zumindest ein befestigter flexibler Gurt oder Lappen (28) ist.

16. Vertikalförderer nach einem der Ansprüche 1 bis 15,
**dadurch gekennzeichnet,**
**daß** die Stell-Klappwände (9, 9') in einer geschlossenen V-Lage jeweils um etwa 30° bis 45° zur Horizontalen geneigt sind und mit ihren unteren Horizontalkanten (14) bzw. deren Innenauskleidung aneinanderstoßen.

17. Vertikalförderer nach einem der Ansprüche 1 bis 15,
**dadurch gekennzeichnet,**
**daß** die bodenseitigen Horizontal-Schieber (25, 25') eine obere Schrägfläche (29) und Keilform besitzen, wobei in einer geschlossenen Lage der Horizontal-Schieber (25, 25') die aufeinander zu gerichteten Horizontalkanten (30) der Keilspitze bzw. deren Innenauskleidung aneinanderstoßen.

18. Vertikalförderer nach Anspruch 16 oder 17,
**dadurch gekennzeichnet,**
**daß** die Schalen (4, 4') zwischen den Seitenwänden (8) zwei entgegengesetzte beabstandete feststehende Querwände (27) besitzen, deren unterer Horizontalrand (31) bis zum bodenseitigen Horizontal-Schieber (25, 25') reicht.

19. Vertikalförderer nach Anspruch 18,
**dadurch gekennzeichnet,**
**daß** die beiden entgegengesetzten Querwände (27) nach unten konisch verjüngt verlaufen.

20. Vertikalförderer nach Anspruch 18 oder 19,
**dadurch gekennzeichnet,**
**daß** an den Querwänden (27) die Gurte oder Lappen (28) hängend befestigt sind und über den unteren Horizontalrand (31) der Querwände (27) hinausreichen.

21. Vertikalförderer nach einem der Ansprüche 9 bis 20,
**dadurch gekennzeichnet,**
**daß** die beiden entgegengesetzten Seitenwände (8) vertikal verlaufen.

22. Vertikalförderer nach einem der Ansprüche 9 bis 20,
**dadurch gekennzeichnet,**
**daß** die beiden entgegengesetzten Seitenwände (8) nach unten konisch verjüngt verlaufen.

23. Vertikalförderer nach einem der Ansprüche 1 bis 22,
**dadurch gekennzeichnet,**
**daß** die Schale (4, 4') zumindest eine Fördergut-Kontrolleinrichtung zur Erkennung des Förderguts in der Schale und/oder zur Steuerung des Förderguts bzw. Auftrags durch die Schale aufweist, insbesondere eine Lichtschranke, welche an die Steuereinrichtung und an den Stelltrieb (10) angeschlossen ist.

24. Vertikalförderer nach einem der Ansprüche 1 bis 23,
**dadurch gekennzeichnet,**
**daß** die Schale(n) als Zwischenspeicher zumindest eines Fördergut-Auftrages (M) verwendet wird/werden.

25. Verfahren zum Vertikalfördern von Fördergut in einem mehrschaligen Vertikalförderer nach den Ansprüchen 1 bis 23,
**dadurch gekennzeichnet,**
**daß** das Fördergut durch Takten geöffneter und/oder geschlossener Schalen (4, 4') des Vertikalförderers (1) von der obersten bis zur untersten Schale und von dort zur unteren Übergabestelle (3) gelangt.

26. Verfahren nach Anspruch 25,
**dadurch gekennzeichnet,**
**daß** zumindest eine Teilmenge (m) eines Fördergut-Auftrages (M) bei der oberen Übergabestelle (2) in die oberste geschlossenen Schale von Hand oder automatisch eingegeben wird,
**daß** die oberste Schale (4) bei einer geschlossenen darunter liegenden Schale (4') geöffnet und **dadurch** die darunter liegende Schale (4') gefüllt wird, welche nach einem Befüllen und Öffnen das Fördergut nach Art der obersten Schale (4) in die nächst tiefere geschlossene Schale befördert, und so fort, bis die unterste geöffnete Schale das Fördergut der unteren Übergabestelle (3) übergibt.

27. Verfahren nach Anspruch 25 oder 26,
**dadurch gekennzeichnet,**
**daß** noch vor der Übergabe des Förderguts bei der unteren Übergabestelle (3) die geschlossene oberste Schale (4) mit Fördergut des gleichen Kommissionierauftrags (M) oder eines neuen Kommissionierauftrags (M') befüllt wird.

28. Verfahren nach Anspruch 25,
**dadurch gekennzeichnet,**
**daß** das Fördergut eine oder mehrere benachbarte gleichzeitig geöffnete Schale(n) (4, 4') durchläuft.

29. Verfahren nach Anspruch 25,
**dadurch gekennzeichnet,**
**daß** das Fördergut alle gleichzeitig geöffneten Schalen (4, 4') durchläuft.

30. Verfahren nach Anspruch 25,
**dadurch gekennzeichnet,**
**daß** das Fördergut alle gleichzeitig halb geöffneten Schalen (4, 4') kaskadenartig, d. h. im Zick-Zack durchläuft.

## Claims

1. A vertical conveyor (1) in a commissioning system for vertically conveying materials being conveyed of the type of individually packaged products of a commissioned order from an upper transfer point (2) to a vertically oriented lower transfer point (3) of the commissioning system by means of a vertically oriented support, which supports the materials being conveyed and can be opened downwardly, wherein at least one support is provided, through which picked-up material being conveyed falls downwardly in the opened state into a next lower, vertically oriented support and/or onto said lower transfer point (3), and said support is provided in the form of a shell (4, 4') which can be opened on the bottom side between said transfer points (2, 3),
having two adjustable tilting walls (9, 9'), which point towards each other and can be opened on the bottom side as an opening mouth, wherein the pivot axes of the two said pivotable adjustable tilting walls (9, 9'), whose pivot axes are adjustable in height, are guided laterally in vertical guide rails (12, 13), as well as the lower ends of the two said pivotable adjustable tilting walls (9, 9') are guided laterally;
or having two horizontal slides (25, 25'), which point towards each other and can be opened on the bottom side as an opening mouth, wherein the said two horizontal slides (25, 25') have a wedge shape with a horizontal bottom side and an upper oblique surface (28), wherein the said two horizontal slides (25, 25') are guided laterally in horizontal guide rails (26) in the area of the bottom-side opening mouth of the shell (4, 4') for opening and closing of the shell.

2. A vertical conveyor in accordance with claim 1,
**characterized in that**
a plurality of said identical shells (4, 4') located at equally spaced locations from one another are provided in a vertical arrangement as a vertical tower, which bridge over the height difference between said upper and lower transfer points (2, 3).

3. A vertical conveyor in accordance with claim 2,
**characterized in that**
at least two vertical towers are provided in a parallel array.

4. A vertical conveyor in accordance with claim 2 or 3,
**characterized in that**
said shells (4, 4') are at least predominantly self-contained components or structural modules.

5. A vertical conveyor in accordance with claim 4,
**characterized in that**
the number of said structural modules is determined by the conveying height or the height difference to be bridged over between said upper and lower transfer points (2, 3).

6. A vertical conveyor in accordance with claim 4 or 5,
**characterized in that**
said structural modules can be plugged vertically into one another.

7. A vertical conveyor in accordance with one of the claims 1 through 6,
**characterized in that**
said upper transfer point (2) is the longitudinal end or the lateral end area of a horizontal central belt (5) of an automatic commissioning unit.

8. A vertical conveyor in accordance with one of the claims 1 through 7,
**characterized in that**
said lower transfer point (3) is the inlet of a horizontal discharge belt (6) with a container (7) containing the ordered goods or buffer hopper located thereon.

9. A vertical conveyor in accordance with one of the claims 1 through 8,
**characterized in that**
said shell (4, 4') has two stationary side walls (8), which are located opposite each other and at spaced locations from one another and, located between them, said two adjustable tilting walls (9, 9'), which are adjustable opposite each other, or said two bottom-side horizontal slides (25, 25'), which are adjustable in opposite directions and which can be adjusted by at least one adjusting drive (10) from a position, in which they are closed on the bottom side, into a position, in which they are open on the bottom side, by at least one control means.

10. A vertical conveyor in accordance with claim 9,
**characterized in that**
said adjusting drive (10) has a pneumatic component.

11. A vertical conveyor in accordance with one of the claims 2 through 10,
**characterized in that**
a plurality of said shells (4, 4') are actuated by a shared adjusting drive.

12. A vertical conveyor in accordance with one of the claims 9 through 11,
**characterized in that**
said two stationary side walls (8) have said vertical and horizontal guide rails (11, 12, 13, 26) on the inside of said shell.

13. A vertical conveyor in accordance with claim 12,
**characterized in that**
each said side wall (8) has a lower horizontal guide rail (11) in the bottom area of said shell and a vertical guide rail (12, 13) in each lateral area, in which [said rails] said adjusting tilting walls (9, 9') are guided at the lower ends and at the laterally upper ends via rollers or sliding blocks.

14. A vertical conveyor in accordance with one of the claims 9 through 13,
**characterized in that**
said adjusting tilting walls (9, 9'), said horizontal slides (25, 25') and/or said side walls (8) have a shock-absorbing inner lining.

15. A vertical conveyor in accordance with claim 14,
**characterized in that**
said inner lining is a attached flexible belt or tab (28).

16. A vertical conveyor in accordance with one of the claims 1 through 15,
**characterized in that**
said adjusting tilting walls (9, 9') are sloped by about 30° to 45° relative to the horizontal in a closed V position and abut against each other with their horizontal edges (14) or their inner lining.

17. A vertical conveyor in accordance with one of the claims 1 through 15,
**characterized in that**
said bottom-side horizontal slides (25, 25') have an upper oblique surface (29) and a wedge shape, wherein said horizontal edges (30) of the tip of the wedge or the inner lining thereof, which said horizontal edges (30) are directed towards each other, abut against each other in a closed position of said horizontal slides (25, 25').

18. A vertical conveyor in accordance with claim 16 or 17,
**characterized in that**
said shells (4, 4') have two opposite stationary transverse walls (27) between said side walls (8), and said lower horizontal edge (31) of said stationary transverse walls (27) extends up to said bottom side horizontal slide (25, 25').

19. A vertical conveyor in accordance with claim 18,
**characterized in that**
said two opposite transverse walls (27) extend downwardly in a conically tapered form.

20. A vertical conveyor in accordance with claim 18 or 19,
**characterized in that**
said belts or tabs (28) are attached in a suspended manner to said transverse walls (27) and extend beyond said lower horizontal edge (31) of said transverse walls (27).

21. A vertical conveyor in accordance with one of the claims 9 through 20,
**characterized in that**
said two opposite side walls (8) extend vertically.

22. A vertical conveyor in accordance with one of the claims 9 through 20,
**characterized in that**
said two opposite side walls (8) extend downwardly in a conically tapered form.

23. A vertical conveyor in accordance with one of the claims 1 through 22,
**characterized in that**
said shell (4, 4') has at least one said checking means for the material being conveyed for recognizing the material being conveyed in said shell and/or for controlling the material being conveyed or order through the shell, especially a photoelectric cell, which is connected to said control means and to said adjusting drive (10).

24. A vertical conveyor in accordance with one of the claims 1 through 23,
**characterized in that**
said shell(s) is/are used as an intermediate storage unit of at least one order (M) of material being conveyed.

25. A process for vertically conveying material being conveyed in a multi-shell vertical conveyor in accordance with claims 1 through 23,
**characterized in that**
the material being conveyed reaches the lowermost shell from the topmost shell and said lower transfer point (3) from the lowermost shell by said, cyclically opened and/or closed shells (4, 4').

26. A process in accordance with claim 25,
**characterized in that**
at least a portion (m) of a order (M) of material being conveyed is entered manually or automatically at said upper transfer point (2) into the topmost closed shell,
that said topmost shell (4) is opened when a shell (4') located under it is closed and said shell (4') located under it is filled as a result, and after filling and opening, said shell (4') conveys the material being conveyed in the manner of said topmost shell (4) into the next lower, closed shell, and so on, until the lowermost opened shell transfers the material being conveyed to said lower transfer point (3).

27. A process in accordance with claim 25 or 26,
**characterized in that**
said closed topmost shell (4) is filled with material being conveyed of said commissioned order (M) or of a new commissioned order (M') still before the material being conveyed is transferred at said lower transfer point (3).

28. A process in accordance with claim 25,
**characterized in that**
the material being conveyed passes through one or more said adjacent shell(s) (4, 4'), which is/are opened simultaneously.

29. A process in accordance with claim 25,
**characterized in that**
the material being conveyed passes through all said simultaneously opened shells (4, 4').

30. A process in accordance with claim 25,
**characterized in that**
the material being conveyed passes through all said shells (4, 4') opened half simultaneously in a cascading manner, i.e., in a zigzag pattern.

## Revendications

1. Transporteur vertical (1) dans un système de préparation des commandes pour le transport vertical de marchandises à transporter de type marchandises de détail d'une commande d'un point de dépôt supérieur (2) à un point de dépôt inférieur (3) orienté verticalement du système de préparation des commandes à l'aide d'un logement orienté verticalement contenant les marchandises à transporter et pouvant être ouvert vers le bas ;
au moins un logement étant prévu à travers lequel la marchandise contenue tombe vers le bas à l'état ouvert dans le logement vertical inférieur suivant et/ou sur le point de dépôt inférieur (3) et le logement étant prévu sous la forme d'une coque (4, 4') pouvant être ouverte côté fond entre les points de dépôt (2, 3), avec deux parois rabattables mobiles (9, 9') orientées l'une vers l'autre pouvant être ouvertes côté fond et prenant la forme d'une gueule d'ouverture ;
une ouverture et une fermeture de la coque permettant de régler en hauteur les axes de pivotement des deux parois rabattables mobiles (9, 9') dans des rails de guidage verticaux (12, 13) tout en guidant en côté les extrémités inférieures des parois rabattables mobiles (9. 9') dans les rails de guidage horizontaux (11) ;
ou deux coulisseaux horizontaux (25, 25') orientés l'un vers l'autre pouvant être ouverts côté fond prenant une forme de coin avec un côté inférieur horizontal et une surface oblique (28) supérieure prenant la forme d'une gueule d'ouverture, les deux coulisseaux horizontaux (25, 25') étant introduits en côté dans les rails de guidage horizontaux (26) dans la zone de la gueule d'ouverture côté fond de la coque (4, 4') pour une ouverture et une fermeture de la coque.

2. Transporteur vertical selon la revendication 1,
**caractérisé en ce que**
plusieurs coques (4, 4') équidistantes sont prévues dans un agencement vertical prenant la forme d'une tour verticale qui franchit la différence de hauteur entre les points de dépôt supérieur et inférieur (2, 3).

3. Transporteur vertical selon la revendication 2,
**caractérisé en ce**
**qu'**au moins deux tours verticales sont prévues dans un agencement parallèle.

4. Transporteur vertical selon la revendication 2 ou 3,
**caractérisé en ce que**
les coques (4, 4') sont au moins en grande partie des éléments fonctionnels et/ou des modules fonctionnels autoporteurs.

5. Transporteur vertical selon la revendication 4,
**caractérisé en ce que**
le nombre de modules fonctionnels est déterminé par la hauteur de transport et/ou la différence de hauteur à franchir entre les points de dépôt supérieur et inférieur (2, 3).

6. Transporteur vertical selon la revendication 4 ou 5,
**caractérisé en ce que**
les modules fonctionnels peuvent être assemblés verticalement.

7. Transporteur vertical selon l'une quelconque des revendications 1 à 6,
**caractérisé en ce que**
le point de dépôt supérieur (2) est l'extrémité longitudinale ou la zone d'extrémité latérale d'une courroie centrale (5) horizontale d'un automate de préparation des commandes.

8. Transporteur vertical selon l'une quelconque des revendications 1 à 7,
**caractérisé en ce que**
le point de dépôt inférieur (3) est l'entrée d'une courroie d'évacuation horizontale (6) avec le conteneur de transport (7) placé dessus ou une trémie tampon.

9. Transporteur vertical selon l'une quelconque des revendications 1 à 8,
**caractérisé en ce que**
la coque (4, 4') possède deux parois latérales (8) fixées opposées et entre elles les deux parois rabattables mobiles (9, 9') pouvant être déplacées dans des directions opposées ou les deux coulisseaux horizontaux (25, 25') côté fond pouvant être déplacés dans des directions opposées qui peuvent être déplacés à l'aide d'au moins une commande de réglage (10) à partir d'une position fermée côté fond dans une position ouverte côté fond au moyen d'au moins un dispositif de commande.

10. Transporteur vertical selon la revendication 9,
**caractérisé en ce que**
la commande de réglage (10) comporte un élément pneumatique.

11. Transporteur vertical selon l'une quelconque des revendications 2 à 10,
**caractérisé en ce que**
plusieurs coques (4, 4') sont actionnées par une commande de réglage commune.

12. Transporteur vertical selon l'une quelconque des revendications 9 à 11,
**caractérisé en ce que**
les deux parois latérales (8) fixes comportent côté intérieur des coques des rails de guidage horizontaux et verticaux (11, 12, 13, 26).

13. Transporteur vertical selon la revendication 12,
**caractérisé en ce que**
chaque paroi latérale (8) comporte dans la zone de fond de la coque un rail de guidage (11) horizontal inférieur et dans chaque zone latérale un rail de guidage (12, 13) vertical dans lesquels les parois rabattables mobiles (9, 9') sont introduites au niveau des extrémités inférieures et au niveau des extrémités supérieures latérales via des rouleaux ou galets de glissement.

14. Transporteur vertical selon l'une quelconque des revendications 9 à 13,
**caractérisé en ce que**
les parois rabattables mobiles (9, 9'), les coulisseaux horizontaux (25, 25') et/ou les parois latérales (8) possèdent un revêtement intérieur amortissant les chocs.

15. Transporteur vertical selon la revendication 14,
**caractérisé en ce que**
le revêtement intérieur est au moins une ceinture flexible fixe ou un tissu (28).

16. Transporteur vertical selon l'une quelconque des revendications 1 à 15,
**caractérisé en ce que**
les parois rabattables mobiles (9, 9') sont inclinées dans une position en V fermée respectivement sur environ 30° à 45° par rapport à l'horizontale et butent l'une contre l'autre avec leurs arêtes horizontales (14) inférieures et/ou leur revêtement intérieur.

17. Transporteur vertical selon l'une quelconque des revendications 1 à 15,
**caractérisé en ce que**
les coulisseaux horizontaux (25, 25') côté fond possèdent une surface oblique (29) supérieure et une forme de coin, les arêtes horizontales (30) orientées l'une sur l'autre du sommet du coin et/ou de leur revêtement intérieur butant l'une contre l'autre dans une position fermée des coulisseaux horizontaux (25, 25').

18. Transporteur vertical selon la revendication 16 ou 17,
**caractérisé en ce que**
les coques (4, 4') possèdent entre les parois latérales (8) deux parois transversales (27) fixes espacées opposées dont le bord horizontal (31) inférieur s'étend jusqu'aux coulisseaux horizontaux (25, 25') côté fond.

19. Transporteur vertical selon la revendication 18,
**caractérisé en ce que**
les deux parois transversales (27) opposées se rétrécissent en cône vers le bas.

20. Transporteur vertical selon la revendication 18 ou 19,
**caractérisé en ce que**
la ceinture ou le tissu (28) sont accrochés au niveau des parois transversales (27) et atteignent le bord horizontal (31) inférieur des parois transversales (27).

21. Transporteur vertical selon l'une quelconque des revendications 9 à 20,
**caractérisé en ce que**
les deux parois latérales (8) opposées s'étendent verticalement.

22. Transporteur vertical selon l'une quelconque des revendications 9 à 20,
**caractérisé en ce que**
les deux parois latérales (8) opposées se rétrécissent en cône vers le bas.

23. Transporteur vertical selon l'une quelconque des revendications 1 à 22,
**caractérisé en ce que**
la coque (4, 4') comporte au moins un dispositif de contrôle de marchandise à transporter pour reconnaître la marchandise contenue dans la coque et/ou pour diriger la marchandise à transporter et/ou la commande à travers la coque, notamment une barrière lumineuse raccordée au dispositif de commande et à la commande de réglage (10).

24. Transporteur vertical selon l'une quelconque des revendications 1 à 23,
**caractérisé en ce que**
la ou les coques servent de zone d'entreposage intermédiaire d'au moins une commande de marchandise à transporter (M).

25. Procédé pour le transport vertical d'une marchandise à transporter dans un transporteur vertical à plusieurs coques selon les revendications 1 à 23,
**caractérisé en ce que**
la marchandise à transporter à travers les coques (4, 4') ouvertes et/ou fermées en cadence du transporteur vertical (1) est transportée de la coque supérieure à la coque inférieure et de là au point de dépôt inférieur (3).

26. Procédé selon la revendication 25,
**caractérisé en ce**
**qu'**au moins une quantité partielle (m) d'une commande de marchandise à transporter (M) est amenée du point de dépôt supérieur (2) dans la première coque fermée, à la main ou automatiquement ;
**que** la coque supérieure (4) est ouverte lorsque la coque (4') placée juste en dessous est fermée, remplissant ainsi la coque (4') placée en dessous, ladite coque transférant la marchandise à transporter, après un remplissage et une ouverture de la coque supérieure, de la même façon que la coque supérieure (4) dans la coque suivante fermée, et ainsi de suite, jusqu'à ce que la coque inférieure soit ouverte et transfère la marchandise à transporter au point de dépôt inférieur (3).

27. Procédé selon la revendication 25 ou 26,
**caractérisé en ce**
**qu'**il est possible que la coque supérieure (4) fermée soit reremplie de marchandise à transporter de la même commande (M) ou d'une nouvelle commande (M') avant même le dépôt de la marchandise à transporter au point de dépôt inférieur (3).

28. Procédé selon la revendication 25,
**caractérisé en ce que**
la marchandise à transporter traverse une ou plusieurs coques (4, 4') connexes ouvertes en même temps.

29. Procédé selon la revendication 25,
**caractérisé en ce que**
la marchandise à transporter traverse toutes les coques (4, 4') ouvertes en même temps.

30. Procédé selon la revendication 25,
**caractérisé en ce que**
la marchandise à transporter traverse toutes les coques (4, 4') semi-ouvertes en même temps en cadence, c'est-à-dire en zigzag.
